# EUROPÄISCHE PATENTSCHRIFT

(11) **EP 1 071 636 B1**
(45) Veröffentlichungstag und Bekanntmachung des Hinweises auf die Patenterteilung: **30.01.2002**
(21) Anmeldenummer: 99914569.1
(22) Anmeldetag: 06.04.1999
(51) Int. Cl.: C02F 3/28, C02F 3/22

(54) **VERFAHREN UND VORRICHTUNG ZUM ANAEROBEN REINIGEN VON ABWASSER NACH DEM UASB-VERFAHREN**
METHOD AND DEVICE FOR ANAEROBIC PURIFICATION OF WASTE WATER USING THE UASB METHOD
PROCEDE ET DISPOSITIF D'EPURATION ANAEROBIE D'EAUX USEES SELON LA TECHNIQUE DU LIT DE BOUES EXPANSEES

(30) Priorität: 07.04.1998 DE 19815616
(43) Veröffentlichungstag der Anmeldung: 31.01.2001
(73) Patentinhaber: USF Deutschland GmbH, 70736 Fellbach (DE)
(72) Erfinder: ROSSMANITH, Peter, D-78239 Rielasingen (DE)
(74) Vertreter: Grünecker, Kinkeldey, Stockmair & Schwanhäusser Anwaltssozietät
(86) Internationale Anmeldenummer: EP9902325
(87) Internationale Veröffentlichungsnummer: WO9951532

(56) Entgegenhaltungen:
- EP-A- 0 170 332
- EP-A- 0 342 722
- WO-A-93/24417
- WO-A-96/23735
- US-A- 5 441 634
- PATENT ABSTRACTS OF JAPAN vol. 010, no. 090 (C-337), 8. April 1986 (1986-04-08) & JP 60 220194 A (KURITA KOGYO KK), 2. November 1985 (1985-11-02)

## Beschreibung

Die Erfindung bezieht sich auf ein Verfahren und eine Vorrichtung zum Reinigen von Abwasser der im Oberbegriff von Anspruch 1 erläuterten Art.

Ein derartiges Verfahren und eine derartige Vorrichtung ist aus der EP 0 170 332 B1 bekannt. Die bekannte Vorrichtung arbeitet anaerob, bevorzugt nach dem bekannten UASB-Verfahren (Upflow-Anaerob-Sludge-Blanket), bei dem ein Behälter verwendet wird, in dessen unteren Bereich das zu reinigende Abwasser geleitet und aus dessen oberen Bereich das gereinigte Abwasser abgeleitet wird. Im Behälter sind anaerobe Mikroorganisrnen tätig. Zwischen dem Abwassereinlaß und dem Überlauf für das gereinigte Abwasser befinden sich im Behälter übereinandergestapelt angeordnete Gassammler in Form von Hauben, deren oberer Bereich über eine Leitung mit einer, Gas-Schlamm-Trenneinrichtung verbunden ist. Durch die Tätigkeit der Mikroorganismen wird Gas erzeugt, das sich am Schlamm anlagert, so daß dieser als sogenannter Schwimmschlamm nach oben aufschwimmt. Dieser Schwimmschlamm wird durch die Haube eingefangen und gibt nach und nach sein Gas wieder ab, so daß er wieder schwerer wird und als sogenannter Sinkschlamm zurück auf den Boden sinkt. Das von den Pellets abgegebene Gas steigt zusammen mit den von den Hauben eingefangenen, freien Gasblasen weiter in den Leitungen nach oben und reißt dabei Schwimmschlarnmpartikel und Flüssigkeit mit, die in der Gas-Schlamm-Trennkammer abgetrennt werden. Das Gas wird zweckmäßigerweise abgeführt, während die mitgerissene Flüssigkeit, die auch Schlammpartikel enthalten kann, in eine Falleitung gelangt, die zurück auf den Boden des Behälters führt. Dadurch soll der Sinkschlamm am Boden aufgwirbelt werden, was zu einer Auflockerung der Schlammzone im Bodenbereich und einer besseren Vermischung der Mikroorganismen mit dem ankommenden Abwasser führen soll. Da Wasser jedoch relativ schwer ist, ist die Menge des durch das aufschwimmende Gas transportierbaren Abwassers und somit auch die Verwirbelungsleistung des rückgeführten Abwassers begrenzt. Weiterhin ist bekannt, daß Abwasserreaktoren dieser Art über Reaktorhöhen von mindestens 11 m verfügen müssen, bevor der dortgenannte Effekt eintritt.

Der Erfindung liegt somit die Aufgabe zugrunde, ein Verfahren und eine Vorrichtung zum Reinigen von Abwasser bereitzustellen, mit der auf konstruktiv einfache Weise eine effektive Verwirbelung und Durchmischung des Sinkschlammes erreicht werden kann.

Die Aufgabe wird durch das Verfahren gemäß Anspruch 1 und die Vorrichtung gemäß Anspruch 9 gelöst.

Durch die erfindungsgemäße Ausgestaltung wird der Sinkschlamm nicht mehr, wie beim Stand der Technik, indirekt durch auftreffendes, rückgeführtes Wasser sondern auf direktem Wege durch Ansaugen in einer Steigleitung bewegt. Dadurcn wird eine wesentlich effektivere und vor allen Dingen sich über im wesentlichen die gesamte Sinkschlammzone erstreckende Strömung erreicht, die dafür sorgt, daß sich nirgendwo Toträume bilden, in denen die Mikroorganismen keine Nahrung finden, oder daß sich keine der sogenannten Kurzschlußströme einstellen, bei denen sich Abwasser zu schnell durch das Schlammbett bewegt und ungenügend gereinigt wird. Dadurch können die Abwasserreaktoren bei gleicher Leistungsfähigkeit erheblich kleiner gebaut werden. Trotzdem kann die Turbulenz innerhalb der Sinkschlammzone nicht so groß werden, daß Schlammpellets durch übergroße Scherkräfte zerstört werden, da die Verwirbelung nach wie vor durch die Hebewirkung des im Abwasser selbst erzeugten Gases erreicht wird. Weiterhin kann bei hohen Reaktoren der oberen Reaktorraum mit einer höhere Dichte an Pelletschlamm versehen werden, wobei die Leistungsfähigkeit nochmals gesteigert wird. Weiterhin können insbesondere bei eiweiß- oder stärkehaltigen Abwässern, die sogenannte aufschwimmende Koagulate bilden, diese ebenfalls wieder in den Bodenbereich geleitet werden.

Die Leistungsfähigkeit wird durch die Maßnahme nach Anspruch 2 weiter gesteigert, da dadurch die Hebeleistung des Gases allein zum Anheben des Sinkschlammes ausgenutzt werden kann.

Zweckmäßigemeise wird der Sinkschlamm gemäß Anspruch 3 in einen Bereich unterhalb des Gassammlers zurück in den Behälter geleitet.

Durch die Maßnahme nach Anspruch 4 kann zusätzlicher Schlamm mitgerissen werden. So können beispielsweise bei eiweiß- oder stärkehaltigen Abwässern, die die sogenannten aufschwimmenden Koagulate bilden, diese ebenfalls wieder in den Bodenbereich geleitet werden.

Durch die Maßnahme nach Anspruch 5 kann die Steigleistung verbessert bzw. das Heben des Sinkschlammes sofort beim Anfahren des Behälters in Gang gesetzt werden.

Die erfindungsgemäße Ausgestaltung eignet sich auch gemäß Anspruch 6 für einen kombinierten anaeroben und aeroben Betrieb.

Auch die Maßnahme nach Anspruch 7 verbessert die Durchwirbelung.

Üblicherweise haben anaerobe Abbauprozesse ein Optimum zwischen 25°C und 37°C. Durch die höheren Strömungen gemäß der vorliegenden Erfindung ist es möglich, die Reaktionstemperatur abzusenken. Die optimale Temperatur für das erfindungsgemäße Verfahren liegt somit gemäß Anspruch 8 zwischen 10 und 37°C. Dies bedeutet eine erhebliche Energieeinsparung, da ein Erwärmen des Abwassers nicht mehr notwendig ist.

Anspruch 9 beschreibt eine besonders bevorzugte, konstruktiv einfache Vorrichtung zum Durchführen des Verfahrens.

Vorteilhafte Weiterbildungen der erfindungsgemäßen Vorrichtung sind den Ansprüchen 10 bis 17 zu entnehmen.

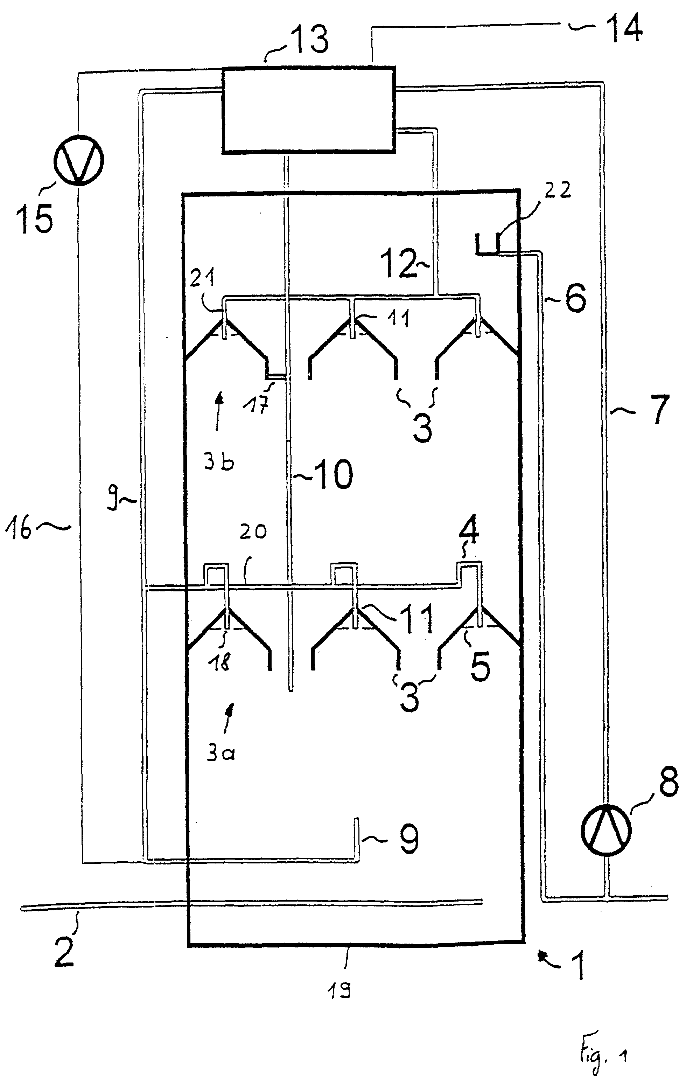

Ein Ausführungsbeispiel einer erfindungsgemäßen Vorrichtung zum Durchführen des erfindungsgemäßen Verfahrens ist der Figur zu entnehmen. In der Figur ist eine erfindungsgemäße Vorrichtung 1 zum Reinigen von Abwasser nach dem UASB-Verfahren ersichtlich, die überwiegend nach dem anaeroben Verfahren arbeitet und nur schematisch dargestellt ist. Die Vorrichtung 1 enthält einen aufrechtstehenden Behälter 19, in den im Bodenbereich, in dem sich eine mit Mikroorganismen versetzte Sinkschlammzone befindet, eine Abwasserleitung 2 einmündet. Die Abwasserleitung 2 kann mit einem der üblichen Verteilssysteme für das Abwasser versehen sein, das jedoch nicht dargestellt ist.

Über die Höhe des Behälters 19 gestaffelt sind eine Vielzahl von Gassammlern 3 angeordnet. Die Gassammler 3 sind im dargestellten Ausführungsbeispiel in zwei Systeme , d.h. einem unteren System 3a und einem oberen System 3b gruppiert. Jeder der Gassammler 3 ist in Form einer der bekannten Gassammelhauben ausgebildet, mit einer nach unten weisenden Öffnung, die sich über den größten horizontalen Querschnitt der Haube erstreckt und mit einem sich nach oben verjüngenden, vertikalen Querschnitt. Es können jedoch auch andere Formen von Gassammlern eingesetzt werden.

Die Gassammler 3 des unteren Systems 3a weisen Leitungen 18 auf, die sich durch ihren Dachfirst 11 erstrecken und gasdicht mit dem First 11 verschweißt sind. Jede der Leitungen 18 erstreckt sich vom Dachfirst 11 noch ein Stück, bevorzugt das 0,1-bis 0,4-fache der Höhe der Gassammelhaube, nach unten in die Gassammelhaube hinein und weist eine horizontale, gegebenenfalls mit Schlammabweisern versehene Mündung auf. Oberhalb des Dachfirstes 11 weisen die Leitungen 18 eine umgekehrt U-förmige Krümmung 4 auf, die mit einer Abführleitung 20 verbunden ist. Die Einmündung der umgekehrt U-förmigen Krümmung 4 in die Abführleitung 20, bzw. die Einmündung der Abführleitung 20 in die Steigleitung 9, liegt einige Zentimeter, vorzugsweise zwischen 5 und 10 cm, oberhalb der Mündung der Leitung 18 unterhalb des Dachfirstes 11. Die Leitung 20, die mit allen Gassammlern 3 des Systems 3a verbunden ist, mündet in eine Steigleitung 9, d.h. eine Rohrleitung mit einem gegenüber dem Querschnitt des Behälters 19 stark verkleinerten Querschnitt, deren untere Ausmündung, bevorzugt mit einer nach oben weisenden, in einer horizontalen Ebene liegenden Mündungsöffnung, im Bodenbereich des Behälters 19, bevorzugt in der Sinkschlammzone liegt. Die Steigleitung 19 führt nach oben in eine oberhalb des Behälters 19 angeordnete Gas-Schlamm-Trenneinrichtung 13. Von dieser Gas-Schlamm-Trenneinrichtung 13 führt eine Sinkleitung 10 zurück in den Behälter 19 und mündet mit einer nach unten weisenden, horizontalen Ausmündung unterhalb des unteren Systems 3a und knapp oberhalb der Sinkschlammzone beabstandet zur Mündung der Steigleitung 9.

Das obere System 3b der Gassammelhauben 3 dient in üblicher Weise dem Zurückhalten von Schwimmschlamm, damit dieser nicht in das gereinigte Abwasser gerät. Die Gassammler 3 des oberen Systems 3b weisen ebenfalls nach oben über den Dachfirst 11 ausmündende Leitungen 21 auf, die jedoch ohne die U-förmige Krümmung 4 des Systems 3a in eine Abfuhrleitung 12 münden, die wiederum in die Gas-Schiamm-Trenneinrichtung 13 führt. Unterhalb der Dachfirste 11 sind die Leitungen 21 wie die Leitungen 18 des Systems 3a ausgebildet.

Einige oder alle Gassammler 3 des oberen Systems 3b können über eine Rohrleitung 17 mit der Sinkleitung 10 verbunden sein. Die Rohrleitung 17 liegt in demjenigen Teil der Gassammler 3, in dem sich bevorzugt der Schwimmschlamm ansammelt.

Oberhalb des oberen Systems 3b befindet sich ein den oberen Wasserspiegel im Behälter 19 bestimmender Überlauf 22 für das gereinigte Wasser, der in eine Wasserleitung 6 mündet. Aus der Wasserleitung 6 mündet eine Rückführleitung 7, die mit einer Pumpe 8 versehen ist und in die Gas-Schlamm-Trenneinrichtung 13 führt. Aus der Gas-Schlamm-Trenneinrichtung 13 führt eine erste Gasleitung 14 heraus, die das gewonnene Biogas zur Weiterverarbeitung, beispielsweise für eine Energiegewinnung, wegführt. Aus der Gas-Schlamm-Trenneinrichtung 13 führt eine weitere Gasleitung 16 heraus, in die ebenfalls eine Pumpe 15 eingeschaltet ist. Die Gasleitung 16 führt in den unteren Bereichen der Steigleitung 9, so daß das Gas zur Unterstützung der Hebewirkung rückgeleitet werden kann.

Die erfindungsgemäße Vorrichtung arbeitet nach dem folgenden Verfahren. Über die Abwasserleitung 2 gelangt das zu reinigende Abwasser, beispielsweise organisch hoch belastetes Abwasser aus der Lebensmittel- oder Papierindustrie, in den unteren Bereich des Behälters 19 und die dort vorhandene, mit Mikroorganismen versetzte Sinkschlammschicht, vorzugsweise in Form der üblichen Schtammpellets. Die Mikroorganismen bauen die organischen Belastungen des Abwassers ab, wodurch Gas entsteht. Das Gas perlt in Form von Gasblasen nach oben und bleibt auch den Schlammpellets hängen, so daß diese leichter werden und aufschwimmen. Das Gas und die als Schwimmschlamm aufschwimmenden, gasbeladenen Pellets gelangen in den Bereich des ersten Systems 3a und werden durch die Gassammler 3 aufgefangen. Das Gas sammelt sich in einem Gaspolster 5 unterhalb des Dachfirstes 11 und oberhalb einer Schicht aus Schwimmschlamm, der ebenfalls nach und nach seine Gasbeladung abgibt und als Sinkschlamm wieder zurücksinkt. Das Gas gelangt über die Leitung 18 in die U-förmige Krümmung 4. in dieser bildet sich ein Gaspolster, das das Aufsteigen und Mitreißen von Schwimmschlamm in die Leitung 20 verhindert. Dadurch gelangt allein Gas über die Leitung 20 in die Steigleitung 9. Dort verursacht das Gas eine starke aufsteigende Strömung und dadurch einen Unterdruck an der Ansaugöffnung der Steigleitung 9 im Bodenbereich, der den dort vorhandenen Sinkschlamm ansaugt und für eine Strömung im Bodenbereich sorgt, die die Schlammpellets allseitig mit dem Abwasser in Kontakt bringt und eine stete Strömung im Boden-. bereich verursacht. Die Mischung aus Gas und angesaugtem Sinkschlamm wird in der Gas-Schlamm-Trenneinrichtung 13 getrennt, wobei das Gas normalerweise über die Leitung 14 zur Weiterverarbeitung geführt wird. Der mitgerissene Schlamm sammelt sich und gelangt wieder nach unten über die Sinkleitung 10 in den Behälter 19, wo er unterhalb des Systems 3a in den Behälter entlassen wird, wieder auf den Boden sinkt und dort für zusätzliche Turbulenzen sorgt. Beim Absinken des Schlamms aus der Trenneinrichtung 13 durch die Sinkleitung 10 wird über das Rohr 17 Schwimmschlamm angesaugt, der sich unter den Gassammlern 3 des oberen Systems 3b angesammelt hat. Diese verstärkt den durch den zurückgeführten Schlamm bewirkten Verwirbelungseffekt. Eine weitere Verstärkung des Verwirbelungseffektes durch den zurücksinkenden Schlamm kann mit Hilfe einer kleinen Menge von bereits gereinigtem Abwasser erreicht werden, das durch die Pumpe 8 der Wasserleitung 6 entnommen und über die Leitung 7 wieder zurück in die Trenneinrichtung 13 gepumpt wird, wo es den Schlamm wirksam durch die Sinkieitung 10 ausspült.

Das Ansaugen kann, insbesondere beim Anlaufen der Vorrichtung 1, unterstützt werden, indem über die Leitung 16 und die Pumpe 15 Gas bzw. unter Umständen auch Luft in die Steigleitung 9 gepumpt wird.

Der Schwimmschlamm und die Gasblasen, die noch nicht vom unteren System 3a eingefangen wurden, bzw. dort bei Überschreitung der Sammelkapazität wieder ausgetreten sind, gelangen in den Bereich des oberen Systems 3b und werden dort von den Gassammlern 3 eingefangen. Das sich im First 11 sammelnde Gas wird über die geradlinigen, vertikalen Leitungen 21 und die Leitung 12 in die Trenneinrichtung 13 geleitet, während die Schwimmschlammschicht entweder über das Rohr 17 abgeleitet wird oder, nach Abgabe des Gases, wieder zurück auf den Boden sinkt. Das gereinigte Abwasser fließt in den Überlauf 22 und gelangt dort in die Wasserleitung 6.

Bei Bedarf kann die erfindungsgemäße Vorrichtung auch zusätzlich aerob betrieben werden, wobei in die Gas-Schiamm-Trenneinrichtung 13 Sauerstoff in einer Menge von 1 bis 3 Vol.-% hinzugegeben wird, um beispielsweise eine biologische Oxidation des im Gas vorhandenen Schwefels zu erreichen. Dabei unterbleibt eine Rückführung des Gases über die Pumpe 15 und die Leitung 16.

In Abwandlung des beschriebenen und gezeichneten Ausführungsbeispieles können mehr als zwei Gassammelsysteme vorgesehen sein bzw. der Behälter nur Gassammler des unteren Gassammelsystems enthalten, sofern diese in der Lage sind, den Schwimmschiamm vom Überlauf für das gereinigte Wasser fernzuhalten. Bei besonders geringen Reaktorhöhen kann die Pumpe zur Rückführung von Gas in die Steigleitung im Dauerbetrieb laufen. Die Steigleitung kann im Inneren des Behälters und die Sinkleitung außerhalb des Behälters verlaufen. Es ist auch möglich, den Sinkschlamm statt in die Trennvorrichtung über einen Abzweig aus dem Steigrohr direkt in den Behälter zu führen.Wenn sichergestellt ist, daß allein oder überwiegend Gas in die Steigleitung gelangt, können die Gassammler ohne die U-förmige Krümmung bzw. mit einer anderen Gas-Trenneinrichtung ausgestattet bzw. mit einer solchen, vor die Steigleitung eingeschalteten Gas-Trenneinrichtung verbunden sein.

## Patentansprüche

1. Verfahren zum Reinigen von Abwasser, insbesondere anaerobe Reinigung, in einem Abwasser und Schlamm aufnehmenden Behälter unter Gasentwicklung, wobei das sich entwickelnde Gas durch einen Gassammler aufgefangen und der sich durch das aufsteigende Gas entwickelnde Kreislauf zum Auflockern des auf den Boden des Behälters abgesunkenen Sinkschlamms verwendet wird, **dadurch gekennzeichnet, daß** durch einen Gashebeeffekt des aufsteigenden Gases Sinkschlamm vom Boden angesaugt, getrennt vom Abwasser im Behälter in den oberen Bereich des Behälters geführt und zurück in das Abwasser geleitet wird.

2. Verfahren nach Anspruch 1, **dadurch gekennzeichnet, daß** das Gas im Gassammler von Schlamm und Flüssigkeit getrennt wird.

3. Verfahren nach Anspruch 1 oder 2, **dadurch gekennzeichnet, daß** der angesaugte Sinkschlamm unterhalb des Gassammlers zurück in das Abwasser geleitet wird.

4. Verfahren nach Anspruch 2 oder 3, **dadurch gekennzeichnet, daß** der angesaugte Sinkschlamm zusammen mit vom Gassammler gesammelten Schlamm zurück in das Abwasser unterhalb des Gassammlers geleitet wird.

5. Verfahren nach einem der Ansprüche 1 bis 4, **dadurch gekennzeichnet, daß** zur Erhöhung der den Gashebeeffekt bewirkenden Gasmenge zusätzliches Gas eingeleitet wird.

6. Verfahren nach einem der Ansprüche 1 bis 4, **dadurch gekennzeichnet, daß** nach dem Abtrennen des Gases Sauerstoff in einer Menge von 1 bis 3 Vol.-% zugegeben wird, um eine biologische Oxidation des im Gas vorhandenen Schwefels zu erreichen.

7. Verfahren nach einem der Ansprüche 1 bis 4, **dadurch gekennzeichnet, daß** dem angesaugten Sinkschlamm gereinigtes Abwasser zugeführt wird, um das Absinken des Schlamms zu unterstützen.

8. Verfahren nach einem der Ansprüche 1 bis 7, **dadurch gekennzeichnet, daß** die Temperatur des Abwassers zwischen 10 und 37°C liegt.

9. Vorrichtung zum Durchführen des Verfahrens nach einem der Ansprüche 1 bis 8, mit einem Behälter (19), einem Abwasserzulauf (2), einem Ablauf (22) für gereinigtes Wasser, wenigstens einer im Behälter (19) angeordneten Gassammelhaube (3) und einer vom oberen Bereich der Gassammelhaube (3) nach oben wegführende Leitung (18, 4) **dadurch gekennzeichnet, daß** von einer Sinkschlammzone am Boden des Behälters (19) eine Steigleitung (9) wegführt, in die die Leitung (18) vom Gassammler (3) so einmündet, daß das vom Gassammler (3) kommende Gas als Gasheber zum Heben des Sinkschlamms in der Steigleitung (9) einsetzbar ist

10. Vorrichtung nach Anspruch 9, **dadurch gekennzeichnet, daß** im Gassammler (3) eine Gas-Trenneinrichtung (4) vorgesehen ist.

11. Vorrichtung nach Anspruch 10, **dadurch gekennzeichnet, daß** die Gas-Trenneinrichtung durch eine im wesentlichen umgekehrt U-förmige Krümmung (4) der aus dem Gassammler (3) nach oben wegführenden Leitung (18) gebildet ist.

12. Vorrichtung nach einem der Ansprüche 9 bis 11, **dadurch gekennzeichnet, daß** die Steigleitung (9) in eine Gas-Schlamm-Trenneinrichtung (13) einmündet, aus der eine Sinkleitung (10) zurück in den Behälter (19) unter den Gassammler (3) führt.

13. Vorrichtung nach Anspruch 12, **dadurch gekennzeichnet, daß** in die Sinkleitung (10) eine Rohrleitung (17) aus dem unteren Bereich des Gassammlers (3) mündet.

14. Vorrichtung nach einem der Ansprüche 9 bis 13, **dadurch gekennzeichnet, daß** im Behälter (19) ein erstes System (3a) einer Mehrzahl von Gassammlem (3) vorgesehen ist, die mit nach oben wegführenden Leitungen (18) mit einer U-förmigen Krümmung (4) versehen sind, und daß oberhalb des ersten Systems (3a) ein zweites System (3b) einer Mehrzahl von Gassammlern (3) vorgesehen ist.

15. Vorrichtung nach Anspruch 13 und 14, **dadurch gekennzeichnet, daß** die Rohrleitung (17) zwischen Gassammlern (3) des zweiten Systems (3b) und der Sinkleitung (10) vorgesehen sind.

16. Vorrichtung nach einem der Ansprüche 9 bis 15, **dadurch gekennzeichnet, daß** in die Steigleitung (9) eine zusätzliche Gasleitung (16) einmündet.

17. Vorrichtung nach einem der Ansprüche 1 bis 16, **dadurch gekennzeichnet, daß** mit der Sinkleitung (10) eine Wasserleitung (7) verbunden ist.

## Claims

1. A method for purifying waste water, in particular by means of anaerobic purification, in a waste water- and sludge-receiving container under generation of gas, the developing gas being trapped by a gas collector and the circulation formed by the ascending gas being used for loosening the sludge which has settled on the bottom of the container, **characterized in that** settled sludge is sucked from the bottom by a gas lifting effect provided by the ascending gas and is passed into the upper portion of the container in a condition separated from the waste water in the container, and returned into the waste water.

2. The method according to claim 1, **characterized in that** the gas in the gas collector is separated from sludge and liquid.

3. The method according to claim 1 or 2, **characterized in that** the sucked settled sludge below the gas collector is returned into the waste water.

4. The method according to claim 2 or 3, **characterized in that** the sucked settled sludge is returned into the waste water below the gas collector together with the sludge collected by the gas collector.

5. The method according to any one of claims 1 to 4, **characterized in that** additional gas is introduced for increasing the amount of gas effected by the gas lifting effect.

6. The method according to any one of claims 1 to 4, **characterized in that** after separation of the gas, oxygen is added in an amount of 1 to 3% by volume to achieve a biological oxidation of the sulfur contained in the gas.

7. The method according to any one of claims 1 to 4, **characterized in that** purified waste water is supplied to the sucked settled sludge for promoting the settling action of the sludge.

8. The method according to any one of claims 1 to 7, **characterized in that** the temperature of the waste water is between 10°C and 37°C.

9. A device for carrying out the method according to any one of claims 1 to 8, comprising a container (19), a waste water inlet (2), an outlet (22) for purified water, at least one gas collecting hood (3) arranged in the container (19), and a pipe (18, 4) leading away from the upper portion of the gas collecting hood (3) upwardly, **characterized in that** a rising pipe (9) extends away from a settled sludge zone at the bottom of the container (19) and the pipe (18) extending from the gas collector (3) terminates in said rising pipe (9) in such fashion that gas flowing from the gas collector (3) can be used as a gas lifter for lifting the settled sludge in the rising pipe (9).

10. The device according to claim 9, **characterized in that** a gas separating means (4) is provided in the gas collector (3).

11. The device according to claim 10, **characterized in that** the gas separating means is formed by a substantially inversely U-shaped bend (4) of the pipe (18) leading away upwards and out of the gas collector (3).

12. The device according to any one of claims 9 to 11, **characterized in that** the rising pipe (9) terminates in a gas-sludge separating means (13) from which a downpipe (10) leads back into the container (19) below the gas collector (3).

13. The device according to claim 12, **characterized in that** a pipeline (17) extending from the lower portion of the gas collector (3) terminates in the downpipe (10).

14. The device according to any one of claims 9 to 13, **characterized in that** the container (19) has provided therein a first system (3a) of a plurality of gas collectors (3) which are provided with pipes (18) leading away upwards and having a U-shaped bend (4), and that a second system (3b) of a plurality of gas collectors (3) is provided above the first system (3a).

15. The device according to claim 13 and 14, **characterized in that** said pipeline (17) is provided between gas collectors (3) of the second system (3b) and the downpipe (10).

16. The device according to any one of claims 9 to 15, **characterized in that** an additional gas line (16) terminates in the rising pipe (9).

17. The device according to any one of claims 1 to 16, **characterized in that** a water pipe (7) is connected to the downpipe (10).

## Revendications

1. Procédé d'épuration d'eaux usées, en particulier épuration anaérobie, dans un récipient contenant des eaux usées et de la boue avec dégagement de gaz, le gaz se dégageant étant recueilli par un collecteur de gaz et la circulation, se développant du fait du gaz ascendant, étant utilisée pour disperser la boue de dépôt qui s'est déposée au fond du récipient, **caractérisé en ce que**, par un effet de siphon du gaz ascendant, la boue déposée est aspirée du fond, conduite dans la zone supérieure du récipient séparément des eaux usées contenues dans le récipient et renvoyée dans les eaux usées.

2. Procédé selon la revendication 1, **caractérisé en ce que** le gaz dans le collecteur de gaz est séparé de la boue et du liquide.

3. Procédé selon la revendication 1 ou 2, **caractérisé en ce que** la boue de dépôt aspirée au-dessous du collecteur de gaz est renvoyée dans les eaux usées.

4. Procédé selon la revendication 2 ou 3, **caractérisé en ce que** la boue de dépôt aspirée est renvoyée, avec la boue recueillie par le collecteur de gaz, dans les eaux usées, au-dessous du collecteur de gaz.

5. Procédé selon l'une des revendications 1 à 4, **caractérisé en ce qu'**on introduit du gaz supplémentaire pour accroître la quantité de gaz qui provoque l'effet de siphon.

6. Procédé selon l'une des revendications 1 à 4, **caractérisé en ce qu'**après séparation du gaz, on ajoute de l'oxygène à raison de 1 à 3 % en volume, pour obtenir une oxydation biologique du soufre contenu dans le gaz.

7. Procédé selon l'une des revendications 1 à 4, **caractérisé en ce que** des eaux usées épurées de la boue de dépôt aspirée sont amenées pour favoriser la descente de la boue.

8. Procédé selon l'une des revendications 1 à 7, **caractérisé en ce que** la température des eaux usées se situe entre 10 et 37 °C.

9. Dispositif pour la mise en oeuvre du procédé selon l'une des revendications 1 à 8, comportant un récipient (19), une arrivée d'eaux usées (2), une évacuation (22) pour l'eau épurée, au moins une hotte de collecte de gaz (3) disposée dans le récipient (19) et une conduite (18, 4) partant, vers le haut, de la zone supérieure de la hotte de collecte de gaz (3), **caractérisé en ce que**, de la zone de dépôt de la boue, au fond du récipient (19), part une conduite montante (9) dans laquelle débouche la conduite (18) venant du collecteur de gaz (3), de telle manière que le gaz, qui provient du collecteur de gaz (3), peut être utilisé comme siphon à gaz pour soulever la boue de dépôt dans la conduite montante (9).

10. Dispositif selon la revendication 9, **caractérisé en ce qu'**un dispositif de séparation de gaz (4) est prévu dans le collecteur de gaz (3).

11. Dispositif selon la revendication 10, **caractérisé en ce que** le dispositif de séparation de gaz est formé par une courbure (4) sensiblement en U inversé de la conduite (18) qui part vers le haut du collecteur de gaz (3).

12. Dispositif selon l'une des revendications 9 à 11, **caractérisé en ce que** la conduite montante (9) débouche dans un dispositif de séparation gaz-boue (13) duquel une conduite descendante (10) retourne dans le récipient (19), sous le collecteur de gaz (3).

13. Dispositif selon la revendication 12, **caractérisé en ce que** dans la conduite descendante (10) débouche une tuyauterie (17) provenant de la zone inférieure du collecteur de gaz (3).

14. Dispositif selon l'une des revendications 9 à 13, **caractérisé en ce que** dans le récipient (19) est prévu un premier système (3a) d'une pluralité de collecteurs de gaz (3) qui sont pourvus de conduites (18) partant vers le haut avec une courbure en U (4), et **en ce qu'**au dessus du premier système (3a) est prévu un deuxième système (3b) d'une pluralité de collecteurs de gaz (3).

15. Dispositif selon les revendications 13 et 14, **caractérisé en ce que** la tuyauterie (17) est prévue entre des collecteurs de gaz (3) du deuxième système (3b) et la conduite descendante (10).

16. Dispositif selon l'une des revendications 9 à 15, **caractérisé en ce qu'**une conduite de gaz (16) supplémentaire débouche dans la conduite montante (9).

17. Dispositif selon l'une des revendications 1 à 16, **caractérisé en ce qu'**une conduite d'eau (7) est reliée à la conduite descendante (10).
